# EUROPÄISCHE PATENTSCHRIFT

(11) **EP 3 487 725 B1**
(45) Veröffentlichungstag und Bekanntmachung des Hinweises auf die Patenterteilung: **23.12.2020**
(21) Anmeldenummer: 17742737.4
(22) Anmeldetag: 21.07.2017
(51) Int. Cl.: B60N 2/08

(54) **FEDERBAUGRUPPE FÜR EINEN ENTRIEGELUNGSMECHANISMUS EINER LÄNGSVERSTELLUNG EINES FAHRZEUGSITZES UND VERFAHREN ZUR MONTAGE EINER FEDERBAUGRUPPE**
SPRING ASSEMBLY FOR AN UNLOCKING MECHANISM FOR A LONGITUDINAL ADJUSTMENT SYSTEM FOR A VEHICLE SEAT AND METHOD FOR INSTALLING A SPRING ASSEMBLY
MODULE DE RESSORT POUR UN MÉCANISME DE DÉVERROUILLAGE D'UN RÉGLAGE LONGITUDINAL D'UN SIÈGE DE VÉHICULE ET PROCÉDÉ DE MONTAGE D'UN MODULE DE RESSORT

(30) Priorität: 25.07.2016 DE 102016213615; 12.10.2016 DE 102016219886
(43) Veröffentlichungstag der Anmeldung: 29.05.2019
(73) Patentinhaber: Adient Luxembourg Holding S.à r.l., 1855 Luxembourg (LU)
(72) Erfinder: FRANK, Paul, 50765 Köln (DE)
(74) Vertreter: Liedtke & Partner Patentanwälte
(86) Internationale Anmeldenummer: PCT/EP2017/068458
(87) Internationale Veröffentlichungsnummer: WO 2018/019712

(56) Entgegenhaltungen:
- EP-A1- 1 384 618
- WO-A1-2009/132944
- GB-A- 2 317 558
- KR-A- 20130 072 007

## Beschreibung

Die Erfindung betrifft eine Federbaugruppe für einen Entriegelungsmechanismus einer Längsverstellung eines Fahrzeugsitzes sowie ein Verfahren zur Montage einer derartigen Federbaugruppe.

Im Stand der Technik sind derartige Federbaugruppen bekannt, die an einer Oberschiene einer Längsverstellung eines Fahrzeugsitzes angeordnet sind. Im Stand der Technik sind außerdem Verfahren zur Montage derartiger Federbaugruppen bekannt.

Aus GB 2 317 558 A ist ein Arretierungsmechanismus für einen Fahrzeugsitz bekannt.

Aus EP 1 384 618 A1 ist ein Arretierungsmechanismus für eine Sitzverschiebevorrichtung bekannt.

Aus KR 2013 0072007 A ist eine Sitzverschiebevorrichtung mit einer Arretierungsvorrichtung bekannt.

Aus WO 2009/132944 A1 ist eine Betätigungseinheit eines Kraftfahrzeugsitzes bekannt.

Aufgabe der vorliegenden Erfindung ist es, eine verbesserte Federbaugruppe für einen Entriegelungsmechanismus, insbesondere für einen Entriegelungsmechanismus einer Längsverstellung, eines Fahrzeugsitzes anzugeben. Aufgabe der Erfindung ist es zudem, ein verbessertes Verfahren zur Montage einer Federbaugruppe für einen Entriegelungsmechanismus einer Längsverstellung eines Fahrzeugsitzes anzugeben.

Die Aufgabe wird erfindungsgemäß mit einer Federbaugruppe gemäß Anspruch 1 und mit einem Verfahren zur Montage einer Federbaugruppe gemäß Anspruch 6 gelöst.

Eine Federbaugruppe dient für einen Entriegelungsmechanismus eines Fahrzeugsitzes, insbesondere für einen Entriegelungsmechanismus einer Längsverstellung eines Fahrzeugsitzes. Die Federbaugruppe weist erfindungsgemäß einen Bügeldraht, eine Federführung und eine Schenkelfeder auf, wobei die Federführung in einem Montagezustand axialverschieblich, aber nicht verdrehbar auf einem geraden ersten Bügelabschnitt des Bügeldrahtes anordbar oder angeordnet ist und wobei die Federführung durch Axialverschiebung auf dem ersten Bügelabschnitt in einen Betriebszustand bringbar oder gebracht ist, in welchem sie gegenüber dem ersten Bügelabschnitt verdrehbar ist.

Die Federbaugruppe ist von einem vorgespannten Montagezustand in einen gegenüber dem Montagezustand zumindest teilweise entspannten Betriebszustand bringbar, in dem der erste Bügelabschnitt relativ zur Federführung axial verschoben wird. Dadurch ist die Federbaugruppe zunächst spannungsfrei, also besonders einfach mit einem Entriegelungshebel zusammenfügbar. Anschließend wird der Bügeldraht axial in der Federführung verschoben. Dadurch wird die Feder freigegeben und übergibt ihre Federkraft von unten gegen den Entriegelungshebel.

Die mit der Erfindung erzielten Vorteile bestehen insbesondere darin, dass eine Montage der Federbaugruppe mit einer Schenkelfeder vereinfacht ist. Die Aktivierung der Schenkelfeder im eingebauten Zustand der Federbaugruppe ist besonders einfach möglich. Dadurch ist ein Entriegelungsmechanismus einer Längsverstellung eines Fahrzeugsitzes strukturell einfach, insbesondere mit reduziertem Personalaufwand herstellbar.

Die erfindungsgemäße Federbaugruppe erlaubt ein stark vereinfachtes Montageverfahren, da die Federbaugruppe in ihrem Montagezustand zunächst spannungsfrei ist, also besonders einfach in einen Entriegelungsmechanismus einer Längsverstellung eines Fahrzeugsitzes einbaubar, insbesondere mit einem Entriegelungshebel zusammenfügbar. Durch die einfach vorzunehmende axiale Verschiebung des Bügeldrahtes in der Federführung wird die Feder auf einfache Weise freigebbar, so dass deren Federkraft auf einfache Weise von unten gegen den Entriegelungshebel übergebbar ist, ohne dass es einer zusätzlichen Einhängung der Feder an der Sitzschiene, wie dies im Stand der Technik erforderlich ist, bedarf.

Bevorzugt ist dabei die Federführung einstückig ausgebildet. Dadurch ist die Federbaugruppe sehr einfach herstellbar.

Besonders bevorzugt umfasst die Federführung dabei eine Hülse und eine Exzenterplatte. Eine Ausgestaltung der Federbaugruppe sieht vor, dass die Exzenterplatte einen ersten Nocken und einen zweiten Nocken sowie einen zwischen den Nocken angeordneten Bogen umfasst. Dadurch ist die Funktion der Federbaugruppe strukturell besonders einfach und kostengünstig erzielbar.

Die erfindungsgemäße Federbaugruppe sieht vor, dass der Bügeldraht einen zum geraden ersten Bügelabschnitt im Wesentlichen parallel verlaufenden zweiten Bügelabschnitt aufweist, der eine zum ersten Bügelabschnitt gerichtete Ausbuchtung umfasst. Dadurch ist die Funktion der Federbaugruppe strukturell besonders einfach und kostengünstig erzielbar.

Dabei ist die Federführung bevorzugt als Federdorn ausgebildet, wobei die Federbaugruppe in der Montageposition gespannt ist und eine Federkraft erst nach Verschiebung des ersten Bügelabschnitts relativ zur Federführung freigebbar ist, wobei während dieser Freigabe die Federführung auf dem ersten Bügelabschnitt rotierbar ist.

Dadurch übernimmt die Federführung zwei weitere Funktionen: Durch die strukturelle Gestaltung der Federführung ist es ermöglicht, dass die Federbaugruppe in einer Montageposition gespannt bleibt und eine Federkraft erst nach Verschiebung des Bügeldrahtes freigegeben wird. Durch diese Freigabe bewegen sich die Federführung und der Bügeldraht in entgegengesetzte Richtungen. Dabei stützt sich der Bügeldraht einerseits gegen den Entriegelungshebel und andererseits stützt sich ein zweiter Nocken der Exzenterplatte gegen eine seitliche Wandung einer oberen Sitzschiene. Eine zusätzliche Einhängung für die Feder an der Sitzschiene ist dadurch entbehrlich.

Eine weitere Ausgestaltung der Federbaugruppe sieht vor, dass im Montagezustand die Federführung zusammen mit dem Bügeldraht und der Schenkelfeder eine Vorspannung bewirkt, wobei ein erstes Ende der Schenkelfeder gegen einen abwinklungsseitigen Bereich des zweiten Bügelabschnitts drückt, wobei ein zweites Ende der Schenkelfeder in der Exzenterplatte fixiert ist, beispielsweise indem es in selbige in Längsrichtung eingesteckt ist, und wobei die Ausbuchtung gegen den ersten Nocken drückt und dadurch bewegungsgehindert, insbesondere nach oben bewegungsgehindert, ist.

Eine weitere Ausgestaltung der Federbaugruppe sieht vor, dass im Betriebszustand nach axialer Verschiebung des Bügeldrahts in der Federführung der erste Nocken neben der Ausbuchtung angeordnet ist, dass der zweite Bügelabschnitt unterseitig an einem Entriegelungshebel mit einer Federkraft angelegt ist und dass der zweite Nocken weiterhin an einer äußeren Wandung einer oberen Sitzschiene anliegt und mit einer Federkraft gegen selbige gepresst ist. Eine zusätzliche Einhängung für die Feder an der Sitzschiene ist dadurch entbehrlich.

Die Federbaugruppe ist dadurch auf einfache Weise von einem vorgespannten Montagezustand in einen gegenüber dem Montagezustand zumindest teilweise entspannten Betriebszustand bringbar, in dem der erste Bügelabschnitt relativ zur Federführung axial verschoben wird. Dadurch ist die Federbaugruppe zunächst spannungsfrei, also besonders einfach mit einem Entriegelungshebel zusammenfügbar. Anschließend wird der Bügeldraht axial in der Federführung verschoben. Dadurch wird die Feder freigegeben und übergibt ihre Federkraft von unten gegen den Entriegelungshebel.

Ein Verfahren betrifft die Montage einer erfindungsgemäßen Federbaugruppe in einen Entriegelungsmechanismus eines Fahrzeugsitzes, insbesondere in einen Entriegelungsmechanismus einer Längsverstellung eines Fahrzeugsitzes. Erfindungsgemäß wird die im Montagezustand gespannte Federbaugruppe an einer oberen Sitzschiene unter einen Entriegelungshebel gebracht, wobei die Federführung mit der Schenkelfeder in eine endgültige Position gebracht wird, in der der zweite Nocken an einer äußeren Wandung der oberen Sitzschiene anliegt. Anschließend wird der Bügeldraht in der Federführung axial verschoben, so dass der zweite Bügelabschnitt unterseitig unter Federkraft am Entriegelungshebel anliegt. Dadurch ist das Montageverfahren stark vereinfacht, da die Federbaugruppe zunächst spannungsfrei ist, also besonders einfach mit einem Entriegelungshebel zusammenfügbar ist. Durch die einfach vorzunehmende axiale Verschiebung des Bügeldrahtes in der Federführung wird die Feder freigegeben und übergibt ihre Federkraft von unten gegen den Entriegelungshebel, ohne dass es einer zusätzlichen Einhängung der Feder an der Sitzschiene, wie dies im Stand der Technik erforderlich ist, bedarf.

Insbesondere bei Fertigstellung der Montage und anschließend im Betriebszustand wird dabei der Bügelabschnitt als Achse für den Entriegelungshebel verwendet. Dadurch ist eine strukturell einfache Ausbildung des Entriegelungsmechanismus mit einfachen Mitteln erzielbar.

Eine Ausgestaltung des Verfahrens sieht vor, dass der Bügelhaken in Wirkverbindung mit dem Entriegelungshebel gebracht wird, so dass im Betriebszustand ein Herausziehen der Federbaugruppe verhindert ist. Eine gesonderte Fixierung der Federbaugruppe ist dadurch entbehrlich.

Eine weitere Ausgestaltung des Verfahrens sieht vor, dass das erste Ende der Schenkelfeder gegen den zweiten Bügelabschnitt wirkt und das zweite Ende der Schenkelfeder in der Bohrung der Exzenterplatte eingehängt ist, wobei zunächst die Federführung durch Kontakt des zweiten Nockens zur Ausbuchtung gegen Verdrehen gesperrt ist und wobei anschließend durch axiale Verschiebung der Federführung eine Federkraft der Federführung freigegeben wird, wobei sich anschließend die Federführung an der Wandung der oberen Sitzschiene stützt und sich der zweite Bügelabschnitt am Entriegelungshebel stützt. Dadurch wird eine separate Einhängung der Schenkelfeder nicht benötigt.

Eine weitere Ausgestaltung des Verfahrens sieht vor, dass zunächst mittels einer an der Ausbuchtung angeordneten Kerbe eine ungewollte axiale Verschiebung der Federführung verhindert wird. Dadurch ist auf einfache Weise eine Transportsicherung ermöglicht. Erst bei einem definierten, zusätzlichen Kraftaufwand wird diese Transportsicherung während der Montage überwunden.

Ausführungsbeispiele der Erfindung werden anhand von Zeichnungen näher erläutert. Dabei zeigen:
- Figur 1: einen Bügeldraht für eine erste Ausführungsform einer Federbaugruppe in perspektivischer Ansicht,
- Figur 2: eine Federführung für die erste Ausführungsform der Federbaugruppe in perspektivischer Ansicht,
- Figur 3: eine Schenkelfeder für die erste Ausführungsform der Federbaugruppe in perspektivischer Ansicht,
- Figur 4: die erste Ausführungsform der Federbaugruppe in vorgespanntem Montagezustand in einer ersten perspektivischen Ansicht,
- Figur 5: die erste Ausführungsform der Federbaugruppe in vorgespanntem Montagezustand in einer zweiten perspektivischen Ansicht,
- Figur 6A: eine perspektivische Ansicht eines ersten Montageschrittes zur Montage der ersten Ausführungsform der Federbaugruppe,
- Figur 6B: eine zugehörige Schnittdarstellung,
- Figur 7A: eine perspektivische Ansicht eines zweiten Montageschrittes zur Montage der ersten Ausführungsform der Federbaugruppe,
- Figur 7B: eine zugehörige Schnittdarstellung,
- Figur 8A: eine perspektivische Ansicht eines dritten Montageschrittes zur Montage der ersten Ausführungsform der Federbaugruppe,
- Figur 8B: eine zugehörige Schnittdarstellung,
- Figur 9A: eine perspektivische Ansicht einer ersten Ausführungsform einer Längsverstellung eines Fahrzeugsitzes mit einer unteren und einer oberen Sitzschiene
- Figur 9B: eine zugehörige, ausschnittsweise vergrößerte Darstellung,
- Figur 9C: eine zugehörige perspektivische Darstellung,
- Figur 9D: eine zugehörige, ausschnittsweise vergrößerte Darstellung,
- Figur 10A: eine perspektivische Ansicht einer zweiten Ausführungsform einer Längsverstellung eines Fahrzeugsitzes mit einer unteren und einer oberen Sitzschiene,
- Figur 10B: eine zugehörige, ausschnittsweise vergrößerte Darstellung,
- Figur 10C: eine zugehörige perspektivische Darstellung,
- Figur 10D: eine zugehörige, ausschnittsweise vergrößerte Darstellung,
- Figur 11A: eine perspektivische Ansicht einer Ausführungsform einer Längsverstellung eines Fahrzeugsitzes mit einer unteren und einer oberen Sitzschiene,
- Figur 11B: eine zugehörige, ausschnittsweise vergrößerte Darstellung,
- Figur 12A: eine perspektivische Ansicht einer Ausführungsform einer Längsverstellung eines Fahrzeugsitzes mit einer unteren und einer oberen Sitzschiene und
- Figur 12B: eine zugehörige, ausschnittsweise vergrößerte Darstellung.

Einander entsprechende Teile sind in allen Figuren mit den gleichen Bezugszeichen versehen.

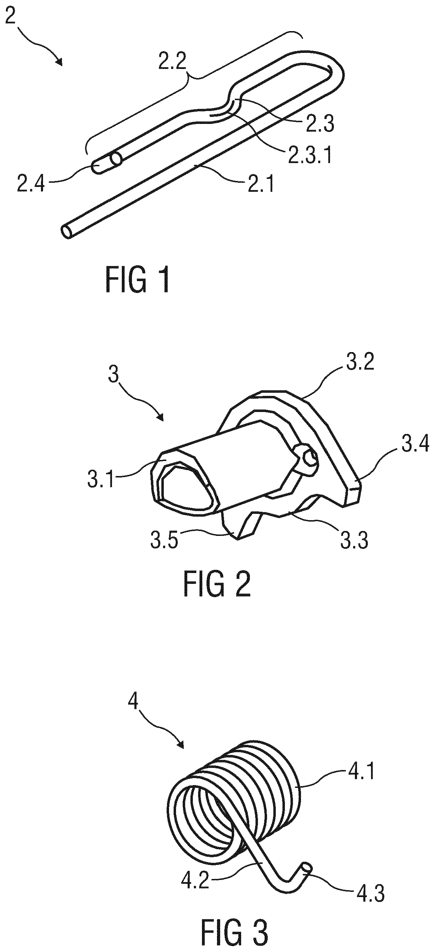

**Figur 1** zeigt einen für eine hier nicht gezeigte erste Ausführungsform einer Federbaugruppe 1 bestimmten Bügeldraht 2 in perspektivischer Ansicht. Der Bügeldraht 2 weist einen geraden ersten Bügelabschnitt 2.1 und einen dazu vorzugsweise im Wesentlichen parallel verlaufenden zweiten Bügelabschnitt 2.2 auf. Etwa in der Mitte des zweiten Bügelabschnitts 2.2 befindet sich eine zum ersten Bügelabschnitt 2.1 gerichtete Ausbuchtung 2.3. An der Ausbuchtung 2.3 ist eine Kerbe 2.3.1 angeordnet, die einer Transportsicherung der Federbaugruppe vor deren Montage und optional oder zusätzlich einer Sicherung der Federbaugruppe vor einer ungewollten Aktivierung während der Montage dient. Am Ende des zweiten Bügelabschnitts 2.2 ist ein Bügelhaken 2.4 angeordnet. Beispielsweise beträgt der Winkel zwischen dem Bügelhaken 2.4 und dem zweiten Bügelabschnitt 2.2 etwa 70° bis 90°.

**Figur 2** zeigt eine für die hier nicht gezeigte erste Ausführungsform der Federbaugruppe 1 bestimmte Federführung 3 in perspektivischer Ansicht. Die Federführung 3 ist einstückig und umfasst eine Hülse 3.1 und eine daran angeordnete Exzenterplatte 3.2. Die Exzenterplatte 3.2 umfasst einen Bogen 3.3 sowie einen ersten Nocken 3.4 und einen zweiten Nocken 3.5. Der Bogen 3.3 befindet sich zwischen den Nocken 3.4, 3.5. An der Exzenterplatte 3.2 sind zwei Bohrungen angeordnet.

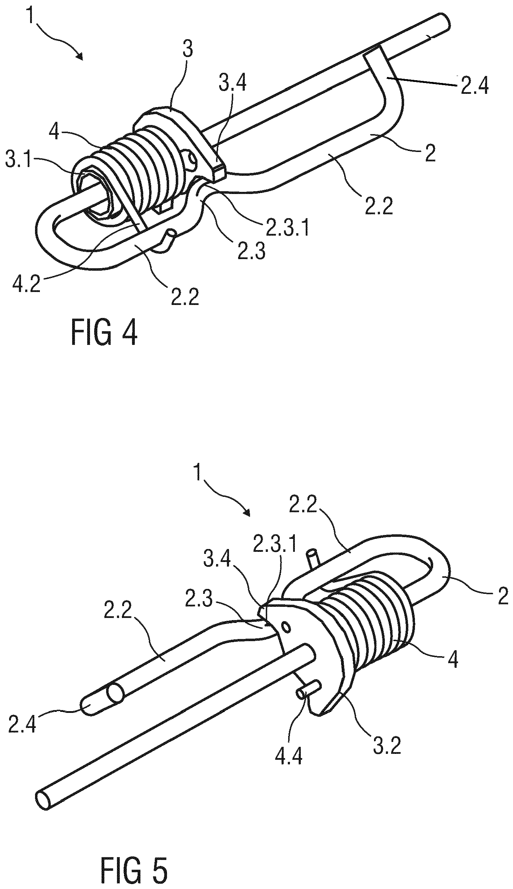

**Figur 3** zeigt eine für die hier nicht gezeigte erste Ausführungsform der Federbaugruppe 1 bestimmte Schenkelfeder 4 in perspektivischer Ansicht. Die Schenkelfeder 4 ist eine Torsionsfeder und umfasst mehrere Schraubenwindungen 4.1, ein erstes Ende 4.2 mit einem Haken 4.3 sowie ein in Figur 5 gezeigtes zweites Ende 4.4.

**Figur 4** und **Figur 5** zeigen die erste Ausführungsform der Federbaugruppe 1 in einem vorgespannten Montagezustand jeweils in einer perspektivischen Ansicht. Die Federbaugruppe 1 umfasst den Bügeldraht 2, die Federführung 3 sowie die Schenkelfeder 4. Die Hülse 3.1 der Federführung 3 ist auf den ersten Bügelabschnitt 2.1 des Bügeldrahtes 2 aufgesteckt. Die Federführung 3 ist dadurch gegenüber dem ersten Bügelabschnitt 2.1 axial verschieblich und umgekehrt. Die Federführung 3 ist jedoch gegenüber dem ersten Bügelabschnitt 2.1 nicht um dessen Längsachse drehbar.

Der am Ende des zweiten Bügelabschnitts 2.2 angeordnete Bügelhaken 2.4 ist windschief zum ersten Bügelabschnitt 2.1 angeordnet.

Optional können die Innenseite der Hülse 3.1 und die Außenwandung des ersten Bügelabschnitts 2.1 bevorzugt eine Anzahl von längsverlaufenden Nuten bzw. eine Anzahl korrespondierender, längsverlaufender Federn oder umgekehrt aufweisen.

Die Federführung 3 bewirkt zusammen mit dem Bügeldraht 2 und der Schenkelfeder 4 eine Vorspannung in dem dargestellten Montagezustand. Dabei drückt das erste Ende 4.2 der Schenkelfeder 4 gegen die Unterseite des abwinklungsseitigen Bereiches des zweiten Bügelabschnitts 2.2. Das zweite Ende 4.4 der Schenkelfeder ist in der Exzenterplatte 3.2 fixiert, indem es in selbige in Längsrichtung eingesteckt ist.

Eine Verformung des zweiten Bügelabschnitts 2.2 nach oben ist in diesem Montagezustand dadurch verhindert, dass die Ausbuchtung 2.3 gegen den ersten Nocken 3.4 gedrückt und nach oben bewegungsgehindert wird. Die Federführung 3 ist dadurch gegenüber dem ersten Bügelabschnitt 2.1 nicht um dessen Längsachse drehbar, bevorzugt zumindest nicht ohne Überwindung der Federkraft der Schenkelfeder 4.

Der dargestellte Montagezustand ist der Zustand, in dem bevorzugt die Federbaugruppe 1 zur Montage für einen Entriegelungsmechanismus einer Längsverstellung eines Fahrzeugsitzes geliefert wird. Die an der Ausbuchtung 2.3 angeordnete Kerbe 2.3.1 verhindert eine ungewollte axiale Verschiebung der Federführung 3 ohne definierten, zusätzlichen Kraftaufwand im Montagezustand und dient als Transportsicherung.

Die Federführung 3 ist auf dem zweiten Bügelabschnitt 2.2 längsverschieblich, insbesondere in Richtung der Abwinklung des Bügeldrahtes 2 verschieblich. Bei ausreichend großer Verschiebung der Federführung 3 axial auf dem zweiten Bügelabschnitt 2.2 wird der erste Nocken 3.4 bevorzugt in Richtung der Abwinklung des Bügeldrahtes 2 neben die Ausbuchtung 2.3 verschoben, so dass die Ausbuchtung 2.3 nicht mehr gegen den ersten Nocken 3.4 gedrückt und nach oben bewegungsgehindert wird. Dabei ist der maximale Hub des ersten Nockens 3.4 kleiner als der Abstand vom ersten Bügelabschnitt 2.1 zur dem ersten Bügelabschnitt 2.1 zugewandten Seite des zweiten Bügelabschnitts 2.2 neben der Ausbuchtung 2.3. Dadurch kann sich nach Axialverschiebung der Federführung 3 der zweite Bügelabschnitt 2.2 der Vorspannkraft der Schenkelfeder 4 folgend zumindest teilweise nach oben bewegen, wobei die Vorspannkraft der Schenkelfeder 4 teilweise, bevorzugt lediglich geringfügig abgebaut wird.

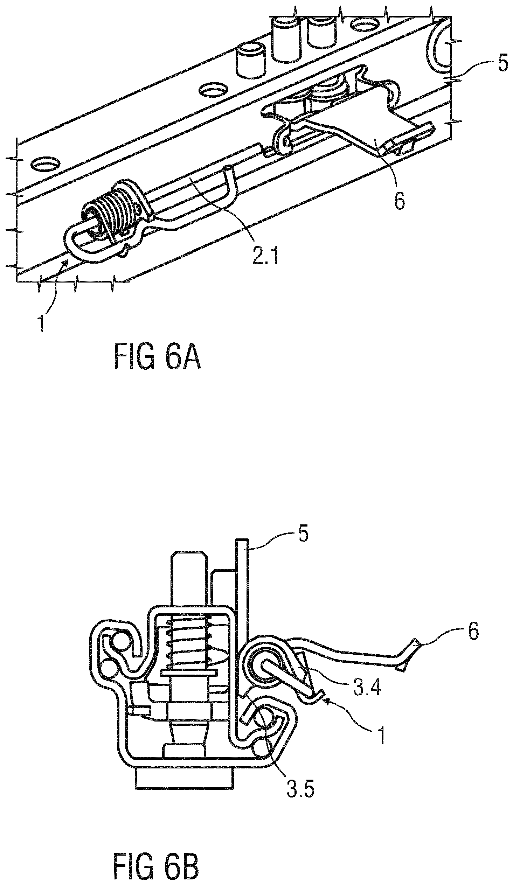

**Figur 6A** und **Figur 6B** zeigen eine perspektivische Ansicht eines ersten Montageschrittes zur Montage der ersten Ausführungsform der Federbaugruppe 1 bzw. eine zugehörige Schnittdarstellung. Die Federbaugruppe 1 soll an einer oberen Sitzschiene 5 eines nicht gezeigten Fahrzeugsitzes montiert werden. Die obere Sitzschiene 5 umfasst einen an sich bekannten Entriegelungshebel 6, bei dessen Betätigung nach unten eine Sitzverriegelung gelöst wird. Die Federbaugruppe 1 soll dazu eingebaut werden, um eine zur Entriegelung zu überwindende Federkraft auf den Entriegelungshebel 6 einwirken zu lassen.

Im dargestellten Montagezustand ist die Federbaugruppe 1 noch wie vorbeschrieben vorgespannt, die Ausbuchtung 2.3 wird also noch vom ersten Nocken 3.4 gehalten. Die Federbaugruppe 1 ist noch nicht in die endgültige Einbauposition gebracht.

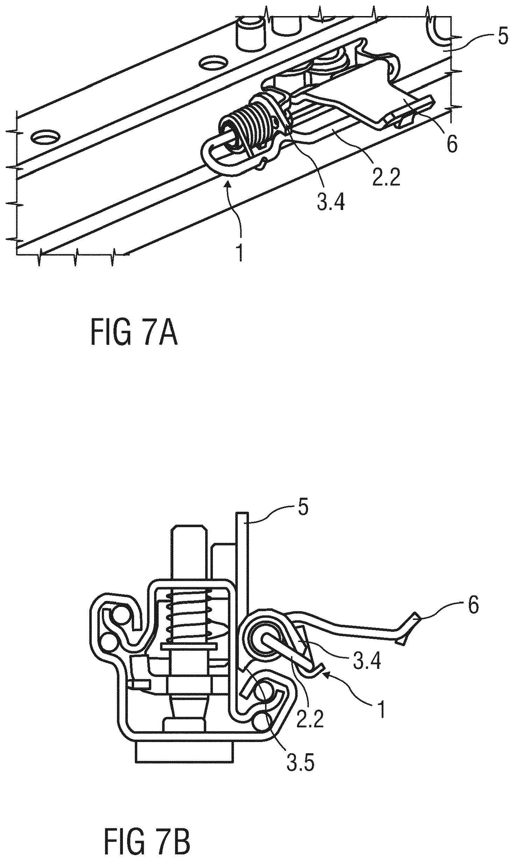

**Figur 7A** und **Figur 7B** zeigen eine perspektivische Ansicht eines zweiten Montageschrittes zur Montage der ersten Ausführungsform der Federbaugruppe 1 bzw. eine zugehörige Schnittdarstellung.

Die Federbaugruppe 1 ist bereits weiter in Längsrichtung verschoben, wobei die Federführung 3 mit der Schenkelfeder 4 die endgültige Einbauposition bereits erreicht hat. Die Federbaugruppe 1 befindet sich aber noch im vorbeschriebenen Montagezustand. Das heißt, die Ausbuchtung 2.3 wird noch vom ersten Nocken 3.4 gehalten. Der zweite Nocken 3.5 liegt bereits an der vertikalen, äußeren Wandung der oberen Sitzschiene 5 an. Die Federbaugruppe 1 ist in Bezug auf den Entriegelungshebel 6 noch spannungsfrei. Der Bügelabschnitt 2.1 dient im montierten Zustand als Drehachse für den Entriegelungshebel 6.

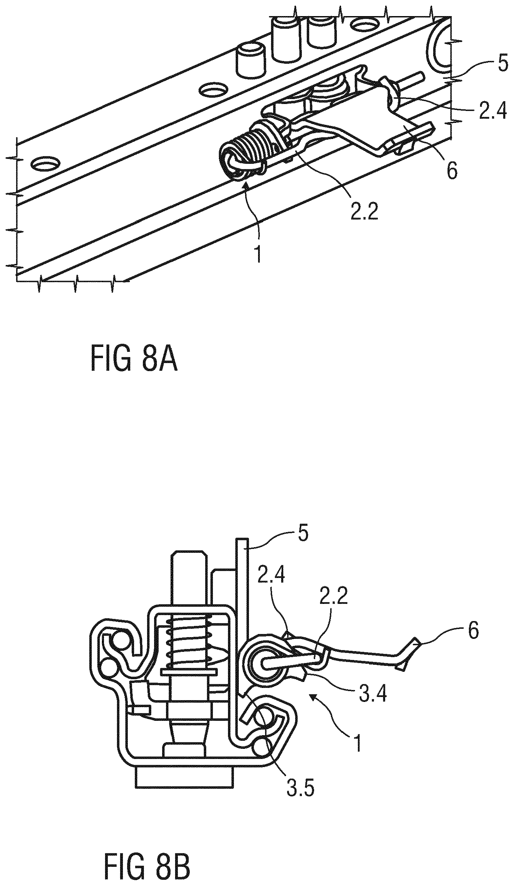

**Figur 8A** und **Figur 8B** zeigen eine perspektivische Ansicht eines dritten Montageschrittes zur Montage der ersten Ausführungsform der Federbaugruppe 1 bzw. eine zugehörige Schnittdarstellung.

Die Federbaugruppe 1 ist bereits in ihre endgültige Einbauposition gebracht. Die Federbaugruppe 1 befindet sich nicht mehr im vorbeschriebenen Montagezustand. Der Bügeldraht 2 wurde in der Federführung 3 axial verschoben, so dass die Ausbuchtung 2.3 nicht mehr vom ersten Nocken 3.4 gehalten wird. Dadurch liegt nun der zweite Bügelabschnitt 2.2 unten am Entriegelungshebel 6 an, wodurch dieser nach oben gedrückt wird. Der zweite Nocken 3.5 liegt weiterhin an der vertikalen, äußeren Wandung der oberen Sitzschiene 5 an und wird nun gegen selbige gepresst.

Die Montagestellung der Federbaugruppe 1 wurde damit bei der Montage derselben durch Verschiebung des Bügeldrahts 2 deaktiviert, so dass zur Betätigung des Entriegelungshebel 6 nach unten nun eine durch die Federbaugruppe 1 vorgegebene Federkraft überwunden werden muss.

Der Bügelhaken 2.4 ist so angeordnet, dass ein Herausziehen der Federbaugruppe 1 im Betriebszustand, also nach Montage, nun verhindert ist.

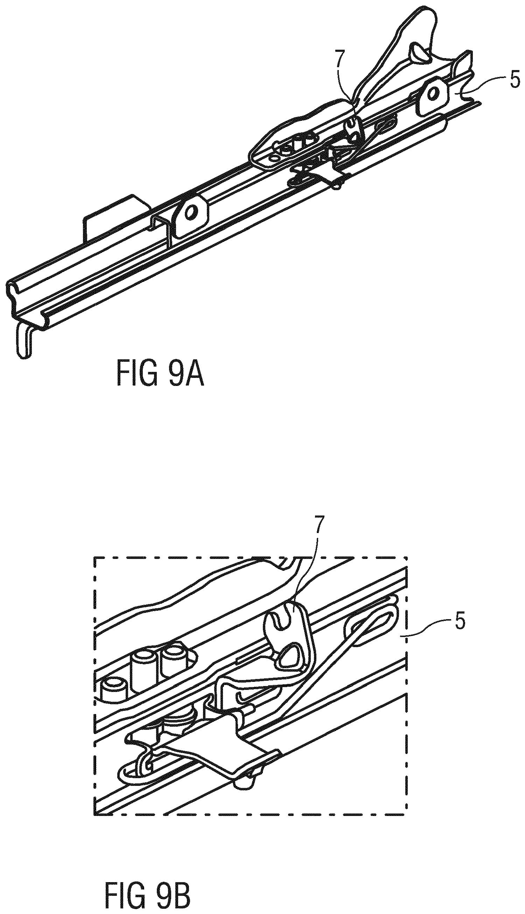

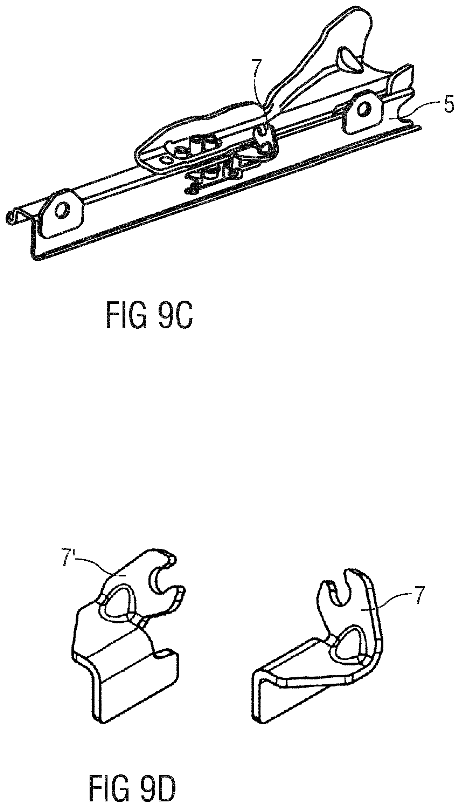

**Figuren 9A bis 9D** zeigen eine perspektivische Ansicht einer ersten Ausführungsform einer Längsverstellung eines Fahrzeugsitzes mit einer unteren und einer oberen Sitzschiene 5. An der oberen Sitzschiene 5 ist eine Halterung 7 zur Aufnahme eines Bowdenzuges angeordnet. Außerdem ist eine korrespondierende Halterung 7' gezeigt, die an einer zweiten, hier nicht gezeigten oberen Sitzschiene anzuordnen oder angeordnet ist.

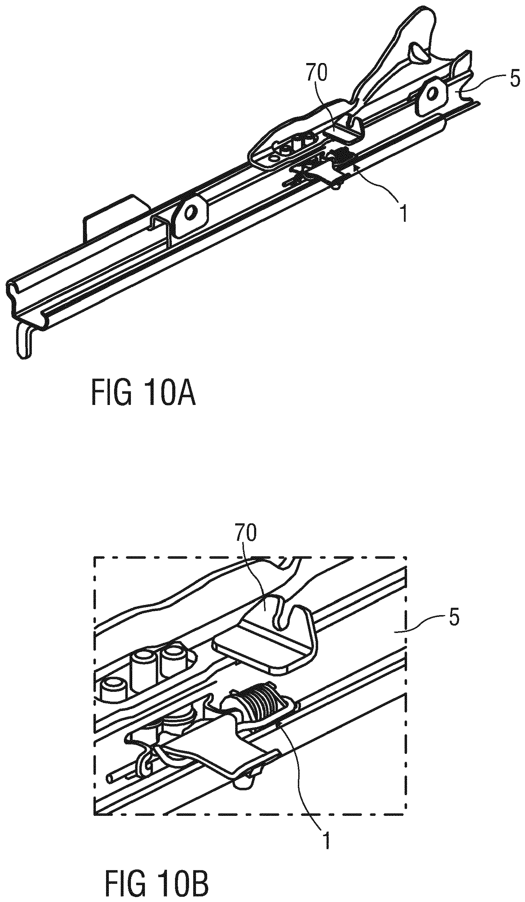

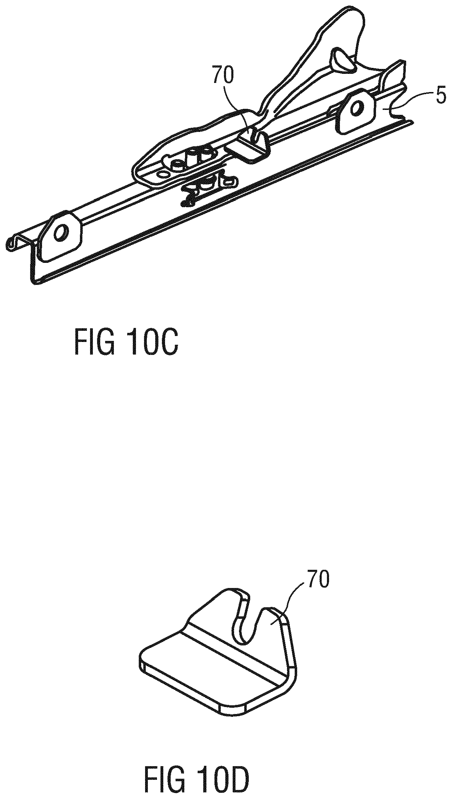

**Figuren 10A bis 10D** zeigen eine perspektivische Ansicht einer zweiten Ausführungsform einer Längsverstellung eines Fahrzeugsitzes mit einer unteren und einer oberen Sitzschiene 5. An der oberen Sitzschiene 5 ist eine Halterung 70 zur Aufnahme eines Bowdenzuges angeordnet. Die Figuren 10A und 10B zeigen auch eine Federbaugruppe 1, Figur 10D zeigt die Halterung 70 allein.

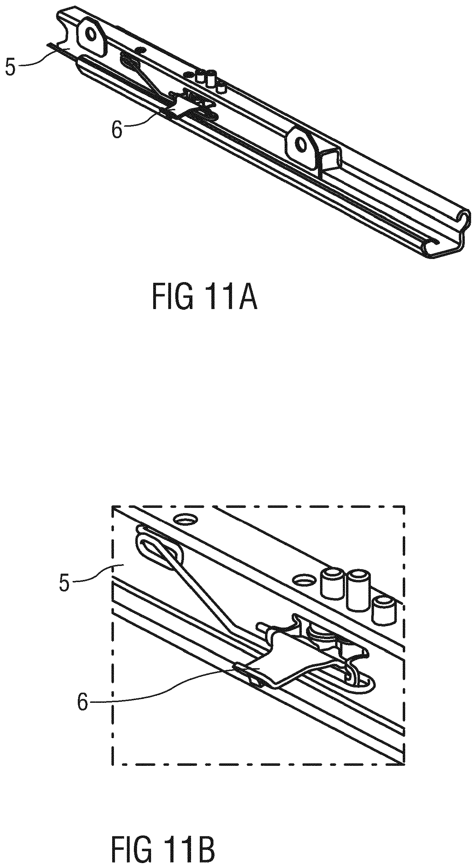

**Figur 11A** und **Figur 11B** zeigen eine perspektivische Ansicht einer Ausführungsform einer Längsverstellung eines Fahrzeugsitzes mit einer unteren und einer oberen Sitzschiene 5, an welcher sich ein Entriegelungshebel 6 befindet.

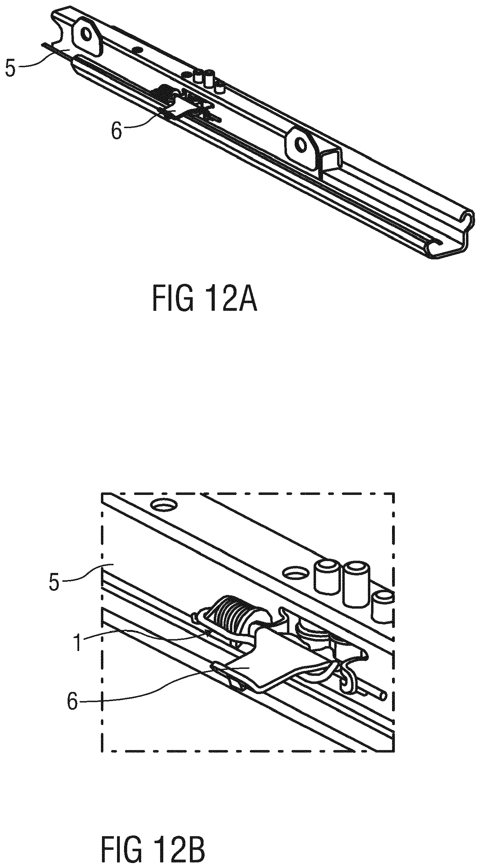

**Figur 12A** und **Figur 12B** zeigen eine perspektivische Ansicht einer Ausführungsform einer Längsverstellung eines Fahrzeugsitzes mit einer unteren und einer oberen Sitzschiene 5, an welcher sich ein Entriegelungshebel 6 befindet, der mit einer Federbaugruppe 1 federkraftbeaufschlagt ist.

### Bezugszeichenliste

- 1: Federbaugruppe
- 2: Bügeldraht
2.1 erster Bügelabschnitt
2.2 zweiter Bügelabschnitt
2.3 Ausbuchtung
2.3.1 Kerbe
2.4 Bügelhaken
- 3: Federführung
3.1 Hülse
3.2 Exzenterplatte
3.3 Bogen
3.4 erster Nocken
3.5 zweiter Nocken
- 4: Schenkelfeder
4.1 Schraubenwindungen
4.2 erstes Ende
4.3 Haken
4.4 zweites Ende
- 5: obere Sitzschiene
- 6: Entriegelungshebel
- 7, 7', 70: Halterung

## Patentansprüche

1. Federbaugruppe (1) für einen Entriegelungsmechanismus eines Fahrzeugsitzes,
aufweisend einen Bügeldraht (2), eine Federführung (3) und eine Schenkelfeder (4), wobei die Federführung (3) in einem Montagezustand axialverschieblich, aber nicht verdrehbar auf einem geraden ersten Bügelabschnitt (2.1) des Bügeldrahtes (2) anordbar oder angeordnet ist und wobei die Federführung (3) durch Axialverschiebung auf dem ersten Bügelabschnitt (2.1) in einen Betriebszustand bringbar oder gebracht ist, in welchem sie gegenüber dem ersten Bügelabschnitt (2.1) verdrehbar ist,
**dadurch gekennzeichnet, dass** der Bügeldraht (2) einen zum geraden ersten Bügelabschnitt (2.1) im Wesentlichen parallel verlaufenden zweiten Bügelabschnitt (2.2) aufweist, der eine zum ersten Bügelabschnitt (2.1) gerichtete Ausbuchtung (2.3) umfasst.

2. Federbaugruppe (1) nach Anspruch 1,
**dadurch gekennzeichnet, dass** die Federführung (3) einstückig ausgebildet ist und eine Hülse (3.1) und eine Exzenterplatte (3.2) umfasst, wobei die Exzenterplatte (3.2) einen ersten Nocken (3.4) und einen zweiten Nocken (3.5) sowie einen zwischen den Nocken (3.4, 3.5) angeordneten Bogen (3.3) umfasst.

3. Federbaugruppe (1) nach Anspruch 1 oder 2,
**dadurch gekennzeichnet, dass** die Federführung (3) als Federdorn ausgebildet ist, wobei die Federbaugruppe (1) in der Montageposition gespannt ist und eine Federkraft erst nach Verschiebung des ersten Bügelabschnitts (2.1) relativ zur Federführung (3) freigebbar ist, wobei während dieser Freigabe die Federführung (3) auf dem ersten Bügelabschnitt (2.1) rotierbar ist.

4. Federbaugruppe (1) nach Anspruch 2,
**dadurch gekennzeichnet, dass** im Montagezustand die Federführung (3) zusammen mit dem Bügeldraht (2) und der Schenkelfeder (4) eine Vorspannung bewirkt, wobei ein erstes Ende (4.2) der Schenkelfeder (4) gegen einen abwinklungsseitigen Bereich des zweiten Bügelabschnitts (2.2) drückt, wobei ein zweites Ende (4.4) der Schenkelfeder in der Exzenterplatte (3.2) fixiert ist und wobei die Ausbuchtung (2.3) gegen den ersten Nocken (3.4) drückt und dadurch bewegungsgehindert ist.

5. Federbaugruppe (1) nach einem der Ansprüche 2 oder 4,
**dadurch gekennzeichnet, dass** im Betriebszustand nach axialer Verschiebung des Bügeldrahts (2) in der Federführung (3) der erste Nocken (3.4) neben der Ausbuchtung (2.3) angeordnet ist, dass der zweite Bügelabschnitt (2.2) unterseitig an einem Entriegelungshebel (6) mit einer Federkraft angelegt ist und dass der zweite Nocken (3.5) an einer äußeren Wandung einer oberen Sitzschiene (5) anliegt und mit einer Federkraft gegen selbige gepresst ist.

6. Verfahren zur Montage einer Federbaugruppe (1) gemäß einem der Ansprüche 4 oder 5 in einen Entriegelungsmechanismus eines Fahrzeugsitzes,
**dadurch gekennzeichnet, dass** die im Montagezustand gespannte Federbaugruppe (1) an einer oberen Sitzschiene (5) unter einen Entriegelungshebel (6) gebracht wird, wobei die Federführung (3) mit der Schenkelfeder (4) in eine endgültige Position gebracht wird, in der der zweite Nocken (3.5) an einer äußeren Wandung der oberen Sitzschiene (5) anliegt und dass anschließend der Bügeldraht (2) in der Federführung (3) axial verschoben wird, so dass der zweite Bügelabschnitt (2.2) unterseitig unter Federkraft am Entriegelungshebel (6) anliegt, wobei der Bügelabschnitt (2.1) als Achse für den Entriegelungshebel (6) verwendet wird.

7. Verfahren nach Anspruch 6,
**dadurch gekennzeichnet, dass** ein Bügelhaken (2.4) in Wirkverbindung mit dem Entriegelungshebel (6) gebracht wird, so dass im Betriebszustand ein Herausziehen der Federbaugruppe (1) verhindert ist.

8. Verfahren nach Anspruch 6 oder 7 zur Montage einer Federbaugruppe (1) gemäß Anspruch 4 in einen Entriegelungsmechanismus eines Fahrzeugsitzes, **dadurch gekennzeichnet, dass** das erste Ende (4.2) der Schenkelfeder (4) gegen den zweiten Bügelabschnitt (2.2) wirkt und das zweite Ende (4.4) der Schenkelfeder (4) in der Bohrung der Exzenterplatte (3.2) eingehängt ist, wobei zunächst die Federführung (3) durch Kontakt des zweiten Nockens (3.5) zur Ausbuchtung (2.3) gegen Verdrehen gesperrt ist und wobei anschließend durch axiale Verschiebung der Federführung (3) eine Federkraft der Federführung (3) freigegeben wird, wobei sich anschließend die Federführung (3) an der Wandung der oberen Sitzschiene (5) stützt und sich der zweite Bügelabschnitt (2.2) am Entriegelungshebel (6) stützt.

9. Verfahren nach einem der Ansprüche 6 bis 8,
**dadurch gekennzeichnet, dass** zunächst mittels einer an der Ausbuchtung (2.3) angeordneten Kerbe (2.3.1) eine ungewollte axiale Verschiebung der Federführung (3) verhindert wird.

## Claims

1. Spring assembly (1) for an unlocking mechanism of a vehicle seat,
having a clip wire (2), a spring guide (3) and a leg spring (4), wherein, in a installation state, the spring guide (3) is arrangeable or is arranged in an axially displaceable but non-rotatable manner on a straight first clip section (2.1) of the clip wire (2), and wherein the spring guide (3) is movable or is moved into an operating state, in which it is rotatable with respect to the first clip section (2.1), by axial displacement on the first clip section (2.1), **characterized in that** the clip wire has a second clip section (2.2) which extends substantially parallel to the straight first clip section (2.1) and which comprises a bulged portion (2.3) which is directed toward the first clip section (2.1).

2. Spring assembly (1) according to Claim 1,
**characterized in that** the spring guide (3) is configured in one piece and comprises a sleeve (3.1) and an eccentric plate (3.2), wherein the eccentric plate (3.2) comprises a first cam (3.4) and a second cam (3.5) as well as an arcuate portion (3.3) arranged between the cams (3.4, 3.5).

3. Spring assembly (1) according to Claim 1 or 2,
**characterized in that** the spring guide (3) is configured as a spring mandrel, wherein the spring assembly (1) is tensioned in the installation position and a spring force is releasable only after the first clip section (2.1) has been displaced relative to the spring guide (3), wherein the spring guide (3) is rotatable on the first clip section (2.1) during this release.

4. Spring assembly (1) according to Claim 2,
**characterized in that**, in the installation state, the spring guide (3) together with the clip wire (2) and the leg spring (4) produces a pre-tension, wherein a first end (4.2) of the leg spring (4) presses against a region of the second clip section (2.2) on the angled-back side, wherein a second end (4.4) of the leg spring is fixed in the eccentric plate (3.2) and wherein the bulged portion (2.3) presses against the first cam (3.4) and as a result is prevented from moving.

5. Spring assembly (1) according to either of Claims 2 and 4,
**characterized in that** in the operating state, after the axial displacement of the clip wire (2) in the spring guide (3), the first cam (3.4) is arranged adjacent to the bulged portion (2.3), **in that** the second clip section (2.2) bears with a spring force against the underside of an unlocking lever (6) and **in that** the second cam (3.5) bears against an outer wall of an upper seat rail (5) and is pressed with a spring force against the same.

6. Method for installing a spring assembly (1) according to either of Claims 4 and 5 in an unlocking mechanism of a vehicle seat,
**characterized in that** the spring assembly (1) which is tensioned in the installation state is moved on an upper seat rail (5) below an unlocking lever (6), wherein the spring guide (3) is moved by the leg spring (4) into a final position in which the second cam (3.5) bears against an outer wall of the upper seat rail (5), and **in that** subsequently the clip wire (2) is axially displaced in the spring guide (3) so that the second clip section (2.2) bears under spring force against the underside of the unlocking lever (6), wherein the clip section (2.1) is used as a pivot pin for the unlocking lever (6).

7. Method according to Claim 6,
**characterized in that** a clip hook (2.4) is brought into operative connection with the unlocking lever (6) so that, in the operating state, the spring assembly (1) is prevented from being pulled out.

8. Method according to Claim 6 or 7 for installing a spring assembly (1) according to Claim 4 in an unlocking mechanism of a vehicle seat,
**characterized in that** the first end (4.2) of the leg spring (4) acts against the second clip section (2.2) and the second end (4.4) of the leg spring (4) is suspended in the bore of the eccentric plate (3.2), wherein the spring guide (3) is initially blocked against rotation by contact of the second cam (3.5) with the bulged portion (2.3), and wherein subsequently a spring force of the spring guide (3) is released by axial displacement of the spring guide (3), wherein subsequently the spring guide (3) is supported on the wall of the upper seat rail (5) and the second clip section (2.2) is supported on the unlocking lever (6).

9. Method according to one of Claims 6 to 8,
**characterized in that** initially, by means of a notch (2.3.1) arranged on the bulged portion (2.3), the spring guide (3) is prevented from being inadvertently axially displaced.

## Revendications

1. Module de ressort (1) pour un mécanisme de déverrouillage d'un siège de véhicule,
comportant un fil formant étrier (2), un guidage de ressort (3) et un ressort à branches (4), dans lequel le guidage de ressort (3), dans un état monté, peut être disposé ou est disposé sur une première partie d'étrier rectiligne (2.1) du fil formant étrier (2) de manière déplaçable axialement mais non rotative, et dans lequel le guidage de ressort (3) peut être amené ou est amené à un état de fonctionnement par déplacement axial sur la première partie d'étrier (2.1), dans lequel état de fonctionnement le guidage de ressort peut être mis en rotation par rapport à la première partie d'étrier (2.1),
**caractérisé en ce que** le fil formant étrier (2) comprend une deuxième partie d'étrier (2.2) s'étendant sensiblement parallèlement à la première partie d'étrier rectiligne (2.1), laquelle deuxième partie comporte un bombement (2.3) orienté vers la première partie d'étrier (2.1).

2. Module de ressort (1) selon la revendication 1,
**caractérisé en ce que** le guidage de ressort (3) est réalisé d'une seule pièce et comporte une douille (3.1) et une plaque à excentrique (3.2), la plaque à excentrique (3.2) comportant une première came (3.4) et une deuxième came (3.5) ainsi qu'un arc (3.3) disposé entre les cames (3.4, 3.5).

3. Module de ressort (1) selon la revendication 1 ou 2,
**caractérisé en ce que** le guidage de ressort (3) est réalisé sous forme de broche de ressort, le module de ressort (1) étant serré dans la position montée et une force élastique ne pouvant être relâchée qu'après le déplacement de la première partie d'étrier (2.1) par rapport au guidage de ressort (3), le guidage de ressort (3) pouvant être entraîné en rotation sur la première partie d'étrier (2.1) pendant ce relâchement.

4. Module de ressort (1) selon la revendication 2,
**caractérisé en ce qu'**à l'état monté, le guidage de ressort (3) produit une précontrainte conjointement avec le fil formant étrier (2) et le ressort à branches (4), une première extrémité (4.2) du ressort à branches (4) pressant contre une région, côté coude, de la deuxième partie d'étrier (2.2), une deuxième extrémité (4.4) du ressort à branches étant fixée dans la plaque à excentrique (3.2) et le bombement (2.3) pressant contre la première came (3.4) et son mouvement étant ainsi entravé.

5. Module de ressort (1) selon l'une des revendications 2 ou 4, **caractérisé en ce qu'**à l'état de fonctionnement, après le déplacement axial du fil formant étrier (2) dans le guidage de ressort (3), la première came (3.4) est disposée près du bombement (2.3), **en ce que** la deuxième partie d'étrier (2.2) est appliquée du côté inférieur avec une force élastique contre un levier de déverrouillage (6), et **en ce que** la deuxième came (3.5) s'applique contre une paroi extérieure d'un rail de siège supérieur (5) et est pressée contre celle-ci avec une force élastique.

6. Procédé de montage d'un module de ressort (1) selon l'une des revendications 4 ou 5 dans un mécanisme de déverrouillage d'un siège de véhicule,
**caractérisé en ce que** le module de ressort (1) serré dans l'état monté est amené au niveau d'un rail de siège supérieur (5) en dessous d'un levier de déverrouillage (6), le guidage de ressort (3) doté du ressort à branches (4) étant amené à une position finale dans laquelle la deuxième came (3.5) s'applique contre une paroi extérieure du rail de siège supérieur (5), et **en ce qu'**ensuite le fil formant étrier (2) est déplacé axialement dans le guidage de ressort (3), de telle sorte que la deuxième partie d'étrier (2.2) s'applique du côté inférieur avec une force élastique contre le levier de déverrouillage (6), la partie d'étrier (2.1) étant utilisée en tant qu'axe pour le levier de déverrouillage (6).

7. Procédé selon la revendication 6,
**caractérisé en ce qu'**un crochet d'étrier (2.4) est amené en liaison fonctionnelle avec le levier de déverrouillage (6), de manière à empêcher une sortie du module de ressort (1) dans l'état de fonctionnement.

8. Procédé selon la revendication 6 ou 7 pour le montage d'un module de ressort (1) selon la revendication 4 dans un mécanisme de déverrouillage d'un siège de véhicule,
**caractérisé en ce que** la première extrémité (4.2) du ressort à branches (4) agit à l'encontre de la deuxième partie d'étrier (2.2) et la deuxième extrémité (4.4) du ressort à branches (4) est suspendue dans l'alésage de la plaque à excentrique (3.2), le guidage de ressort (3) étant tout d'abord bloqué en rotation par contact de la deuxième came (3.5) avec le bombement (2.3) et une force élastique du guidage de ressort (3) étant ensuite relâchée par déplacement axial du guidage de ressort (3), le guidage de ressort (3) s'appuyant ensuite contre la paroi du rail de siège supérieur (5) et la deuxième partie d'étrier (2.2) s'appuyant contre le levier de déverrouillage (6).

9. Procédé selon l'une des revendications 6 à 8,
**caractérisé en ce que** tout d'abord un déplacement axial non désiré du guidage de ressort (3) est empêché au moyen d'une encoche (2.3.1) disposée sur le bombement (2.3) .
